# EUROPEAN PATENT SPECIFICATION

(11) **EP 3 073 629 B1**
(45) Date of publication and mention of the grant of the patent: **02.08.2023**
(21) Application number: 13897884.6
(22) Date of filing: 22.11.2013
(51) Int. Cl.: H02P 6/18, H02P 1/02

(54) **POWER CONVERSION DEVICE AND CONTROL METHOD FOR PERMANENT MAGNET SYNCHRONOUS MOTOR**
LEISTUNGSUMWANDLUNGSVORRICHTUNG UND STEUERUNGSVERFAHREN FÜR PERMANENTMAGNETSYNCHRONMOTOR
DISPOSITIF DE CONVERSION DE PUISSANCE ET PROCÉDÉ DE COMMANDE POUR MOTEUR SYNCHRONE À AIMANT PERMANENT

(43) Date of publication of application: 28.09.2016
(73) Proprietor: Hitachi Industrial Equipment Systems Co., Ltd., Tokyo 101-0021 (JP)
(72) Inventor: IBORI, Satoshi, Tokyo 101-0022 (JP); ARAO, Yusuke, Tokyo 101-0022 (JP); YAMAZAKI, Tadashi, Tokyo 101-0022 (JP); UCHINO, Yoshihiro, Tokyo 101-0022 (JP); HIROTA, Masayuki, Narashino-shi, Chiba 275-0001 (JP); SUGINO, Hidenori, Tokyo 101-0022 (JP)
(74) Representative: Mewburn Ellis LLP
(86) International application number: PCT/JP2013/081463
(87) International publication number: WO 2015/075806

(56) References cited:
- JP-A- H0 787 784
- JP-A- H0 787 784
- JP-A- 2000 078 878
- JP-A- 2002 281 795
- JP-A- 2007 174 721
- US-A1- 2006 201 726
- US-A1- 2007 013 326

## Description

### TECHNICAL FIELD

The present invention relates to a power conversion device and a control method for a permanent magnet synchronous motor.

### BACKGROUND ART

Up to now, when a power conversion device performs variable speed control of a permanent magnet synchronous motor, it has to detect a magnetic pole position at a startup of the permanent magnet synchronous motor. This is because if the magnetic pole position of the permanent magnet synchronous motor is different from the output phase of the power conversion device, the permanent magnet synchronous motor will go out of control due to a pull-out phenomenon specific to permanent magnet synchronous motors. Patent Literature 1 discloses a magnetic pole detection method that derives a current phase at an absolute scale absolute position at the time of power-on by calculation from relation between the absolute scale absolute position and the current phase stored in a storage device.

JP H07 87784 A discloses a control device of a brushless motor, a control part switches the brushless motor to synchronous operation and then stops the motor or stops the rotor of the brushless motor by exciting the specific phase of an armature winding. At this time, the position of the rotor is detected, at the same time the same position information is stored at a memory part, and the position information is stored at the internal memory of an indoor machine microcomputer. If start command and position information from the indoor machine microcomputer are received when starting the brushless motor for the second time or thereafter, the specific phase of an armature winding is successively excited for performing synchronous stating operation, then drive frequency and drive signal ON duty ratio are increased gradually, and then mode is switched when the electromotive force generated at the armature winding becomes sufficiently large.

US 2006/201726 A1 discloses determining a start-up of a sensorless motor. An apparatus includes an elapsed time determination unit, a motor velocity determination unit and an abnormal start-up determination unit. The elapsed time determination unit determines whether a predetermined time has elapsed after a start-up of the motor is initiated. The motor velocity determination unit determines whether a velocity of the motor exceeds a predetermined velocity value when the predetermined time has elapsed. The abnormal start-up determination unit determines that the motor was abnormally started up when the velocity of the motor does not exceed the predetermined value, and an amount of current flowing in the motor does not exceed a predetermined current value.

US 2007/013326 A1 discloses a motor controller for controlling an electric motor including a soft starter and a human-machine interface for control and configuration of the soft starter, said soft starter comprising a visual display and selection means associated with the visual display; and a method to configure a motor controller for controlling an electric motor, including a soft starter and a human-machine interface for control and configuration of the soft starter. In other aspects the invention provides a computer program and graphic user interface for carrying out the method.

JP 2000 078878 A discloses a control apparatus of a synchronous motor for an elevator, having brake gear to release holding of stoppage of machinery irrespective of rotation position of motor and magnetic-pole phase is estimated from armature current. Driving of machinery is performed by control apparatus. Holding of stoppage of machinery is released by a brake gear irrespective of the rotation position of synchronous motor. Then, magnetic-pole phase of synchronous motor is estimated from armature current and load torque.

### CITATION LIST, PATENT LITERATURE

Patent Literature 1: JP-A-2007-116759

### SUMMARY OF INVENTION

### TECHNICAL PROBLEM

Ordinarily, when a permanent magnet synchronous motor is operated, the magnetic pole position of the permanent magnet synchronous motor is estimated using information on current and voltage of the permanent magnet synchronous motor. However, when the operation of the permanent magnet synchronous motor is stopped, current and voltage become zero and information cannot be obtained, thereby causing information on the magnetic pole position estimated up until that point to be lost; therefore, there is a need for means to estimate the magnetic pole position each time when the permanent magnet synchronous motor is restarted.

In the case of a permanent magnet synchronous motor equipped with a magnetic pole position sensor, it is always able to detect the magnetic pole position even when a power conversion device is stopped, but in the case of a permanent magnet synchronous motor not equipped with a magnetic pole position sensor, the magnetic pole position is detected each time before initiating a startup from a stop.

For this reason, paragraph [0008] in Patent Literature 1 discloses that "in synchronous motor magnetic pole detection methods for determining a current phase to be applied on the basis of a provisional magnetic pole position which is a startup position, provided is a magnetic pole detection method that stores in a storage device an absolute scale absolute position after magnetic pole position estimation and a current phase at that position, as a current phase at an absolute scale absolute position or an absolute scale absolute position at a current phase, and derives a current phase at the absolute scale absolute position at the time of power-on by calculation from relation between the absolute scale absolute position and the current phase stored in the storage device from the time of next power-on."

However, in the invention in Patent Literature 1, an absolute encoder, which is a magnetic pole position sensor, is indispensable, and it is installed at the side opposite to a load of a synchronous motor. When an encoder is installed at a motor, the encoder must be installed at the side opposite to the load of the motor, and therefore a dual-shaft motor is required; consequently, there arise problems such as securing an installation place due to increase in the size of the motor including the encoder, an erroneous signal due to noise mixed in encoder output, and necessity for a dual shaft-processed special motor.

Generally, in order to detect a magnetic pole position, it requires a time from hundreds milliseconds to several seconds; therefore, detecting the magnetic pole position each time at a startup causes an increased tact time in the case of load applications that frequently repeat a start and a stop, and thus, it is not a desirable estimation mode.

For example, in the case of a permanent magnet synchronous motor with a mechanical brake, however, the brake is applied without fail at a stop of the motor, and thereby the motor does not rotate through inertia nor is rotated by a load at the stop. Therefore, it is not necessary to detect the magnetic pole position each time before initiating a startup from a stop, and possible to start the permanent magnet synchronous motor from the stop using initial magnetic pole position estimation.

In other words, depending on a system configuration, it is not necessary to detect the magnetic pole position each time, and there is an application that can be controlled using initial magnetic pole position estimation data. Taking above into consideration, the present invention aims for providing a configuration that enables a user to select means for identifying the magnetic pole position depending on the system configuration.

### SOLUTION TO PROBLEM

In order to achieve the above objective a power conversion device is provided as set forth in claim 1. Also provided is a control method for performing variable speed control of a synchronous motor in which a permanent magnet is used as set forth in claim 9.

### ADVANTAGEOUS EFFECTS OF INVENTION

The present invention enables reduction in a magnetic pole position estimation time by using different magnetic pole position estimation data depending on a system.

### BRIEF DESCRIPTION OF DRAWINGS

[Fig. 1] Fig. 1 is an example of a configuration diagram of a power conversion device according to an embodiment.
[Fig. 2] Fig. 2 is an example of another configuration diagram of the power conversion device according to the embodiment.
[Fig. 3] Fig. 3 is a simple equivalent circuit of a permanent magnet synchronous motor.
[Fig. 4] Fig. 4 is a control block diagram of the power conversion device according to the embodiment.
[Fig. 5] Fig. 5 is a display example of a digital operation panel according to the embodiment.
[Fig. 6] Fig. 6 is a control block diagram of the power conversion device according to the embodiment.
[Fig. 7] Fig. 7 is a display example of the digital operation panel according to the embodiment.
[Fig. 8] Fig. 8 is a configuration diagram of a power conversion device according to an embodiment.
[Fig. 9] Fig. 9 is a display example of a digital operation panel according to the embodiment.
[Fig. 10] Fig. 10 is an example of a control flowchart according to the embodiments.
[Fig. 11] Fig. 11 is an explanatory diagram of magnetic pole position detection according to the embodiment.

### DESCRIPTION OF EMBODIMENTS

### EMBODIMENT 1

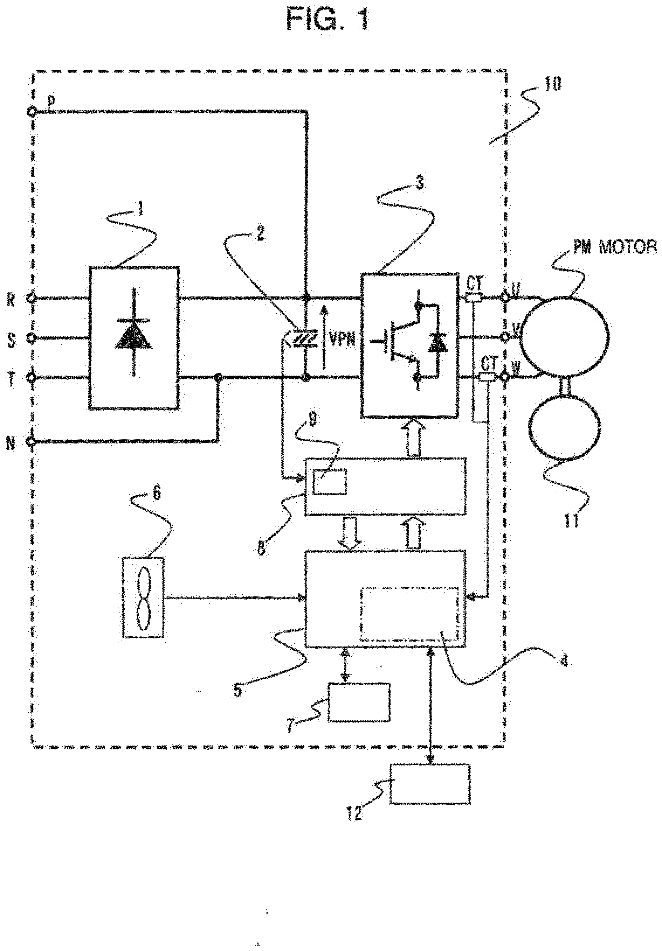

Hereinafter, Embodiment 1 will be explained with reference to the drawings. Constituents common to figures are given the same reference numerals. In addition, Embodiment 1 is not limited to shown examples. The form of a power conversion device in Embodiment 1 will be explained below reference to the figures. Fig. 1 is an example of a configuration diagram of the power conversion device according to Embodiment 1.

A power conversion device 10 in Fig. 1 comprises a forward converter 1 for supplying power to a PM motor (hereinafter called a permanent magnet synchronous motor) directly coupled onto a load device 11, a smoothing capacitor 2, an inverse converter 3, a control arithmetic device 4, a control circuit 5, a cooling fan 6, a digital operation panel 7, a drive circuit 8, and a voltage detection circuit 9. Fig. 1 shows the case of using an AC power supply as any input power supply. The forward converter 1 converts AC power to DC power. The smoothing capacitor 2 is comprised in a DC intermediate circuit.

The inverse converter 3 converts DC power into AC power with any frequency. Inside the inverse converter 3, as a typical switching element, for example, an IGBT is mounted. The switching element is not limited to an IGBT, and any thing is sufficient as long as it has a form as a switching element. For example, it may be SiC (Silicon Carbide) or GaN (Gallium Nitride), which is a wide-band gap semiconductor element having performance overleaping the solid-state property value limit of Silicon (Si).

The cooling fan 6 takes the heat from power modules in the forward converter 1 and the inverse converter 3. The digital operation panel 7 performs setting and changing of various control data of the power conversion device and displaying of an abnormal state and a monitor state. The operation panel 7 is provided with a display unit capable of abnormality display, and abnormality is displayed on the display unit when the abnormality in the power conversion device is detected. The operation panel 7 in the embodiment is not limited to a particular type, but taking operability for a device user into consideration, as a digital operation panel, it has a configuration such that the user can operate it while looking at the display on the display unit.

The display unit does not necessarily need to have an integral structure with the operation panel 7, but it is desirable to have the integral structure so as to enable an operator of the operation panel 7 to operate it while looking at the display. Various control data of the power conversion device input from the operation panel 7 is stored in an unshown storage unit.

The control circuit 5 controls a switching element of the inverse converter 3 on the basis of various control data input by the digital operation panel 7, and serves to manage control of the whole power conversion device 10. The control circuit 5 is equipped with the control arithmetic device 4 (for example, a microcomputer) and configured to be able to perform control processing necessary according to various control data input by the digital operation panel 7. In addition, it is also configured to be able to perform control processing necessary according to various control data input from an upper-level device 12 (for example, a communication device or radio device). Although an internal configuration is omitted, the control arithmetic device 4 (for example, a microcomputer) performs arithmetic on the basis of information from storage data in the storage unit storing various control data.

Current detectors CTs detect line current of the U phase and W phase of the permanent magnet synchronous motor. Line current of the V phase is obtained as iv = -(iu+iw) from an AC condition (iu+iv+iw = 0).

Fig. 1 shows an example of using two CTs, but three CTs may be used and line current of each of the U phase, V phase and W phase may be detected.

The drive circuit 8 drives the switching element of the inverse converter 3 on the basis of a command from the control circuit 5. Inside the drive circuit 8, a switching regulator circuit (DC/DC converter) is mounted, generates various DC voltage necessary to operate the power conversion device, and supplies it to various constituents. The DC voltage detection circuit 9 detects voltage of the smoothing capacitor 2 forming the DC intermediate circuit. In addition, in the case of supplying DC power instead of AC power as any input power, it is only necessary to connect the "+" side of a DC power supply to a DC terminal P side, and to connect the "-" side of the DC power supply to a DC terminal N side. Furthermore, it may be good to connect AC terminals R, S and T together, to connect the "+" side of the DC power supply to this connection point, and to connect the "-" side of the DC power supply to the DC terminal N side. Conversely, it may be good to connect the "+" side of the DC power supply to the DC terminal P side, to connect the AC terminals R, S and T together, and to connect the "-" side of the DC power supply to this connection point.

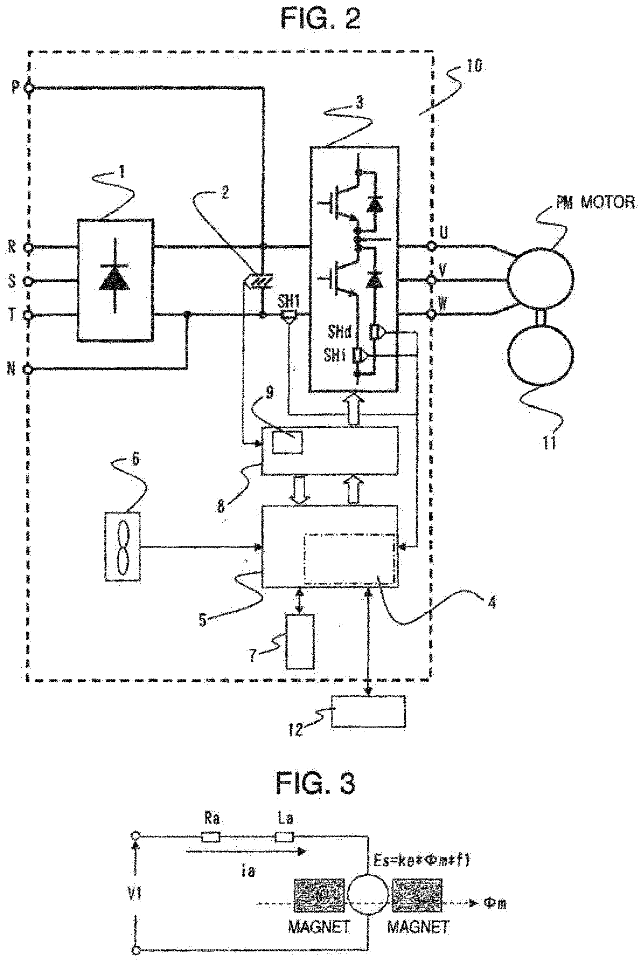

Fig. 2 is an example of another configuration diagram. In the same way as the configuration example in Fig. 1, it is able to perform below-described control. Constituents common to and the same functions as Fig. 1 are given the same reference numerals. Difference from Fig. 1 is the detection positions of current detectors.

SH1, SHi and SHd are shunt resistors for current detection, SH1 detects current at the N side of the DC intermediate circuit, SHi is connected with IGBTs of the U phase, V phase and W phase, which are switching elements of a lower arm constituting part of the inverse converter 3, and SHd is connected with diodes connected in parallel with the respective IGBTs which are switching elements.

In other words, the shunt resistor SHi provided at a DC bus bar side of the power conversion device is a current detector for detecting composite current flowing through the IGBTs, and the shunt resistor SHd provided at the DC bus bar side of the power conversion device is a current detector for detecting composite current flowing through the diodes connected in parallel with the respective IGBTs. The shunt resistors provided at the DC bus bar side of the power conversion device are able to detect current flowing through the permanent magnet synchronous motor.

The shunt resistors SHi and SHd are connected with the IGBT and the diode, respectively, in the lower arm constituting part of the U phase, but they may be connected with an IGBT and a diode, respectively, in an upper arm constituting part of the U phase to detect current. In addition, Fig. 3 is a simple equivalent circuit of the permanent magnet synchronous motor driven by the power conversion device in the embodiment. It consists of armature resistance Ra, armature inductance La, armature current Ia, speed electromotive force Ea, and magnetic flux of a permanent magnet Φm.

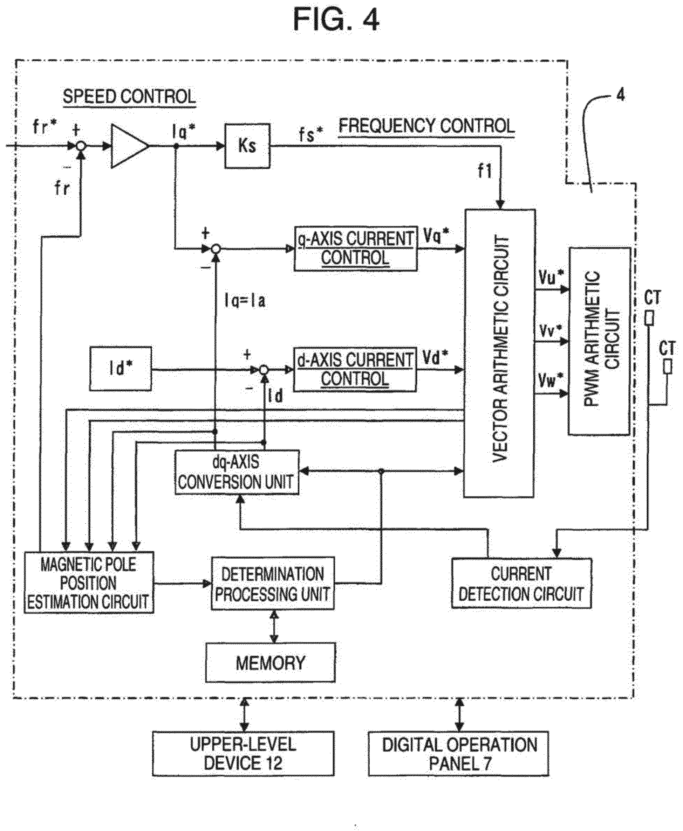

Fig. 4 is a control block diagram of the power conversion device according to the embodiment. This shows a control block that is inside the control circuit 5 disclosed in Figs. 1 and 2, and that is a partial processing block performed by the control arithmetic device 4 (for example, a microcomputer).

As control for the power conversion device to drive the permanent magnet synchronous motor, supposing that a "d" axis is the direction of magnetic flux Φm generated by the attached magnet, the power conversion device controls the vector of current so that the armature current Ia flows through a "q" axis (electrically θ = 90°) orthogonal to the "d" axis. In order to set the "d" axis, the direction of magnetic flux generated by the magnet is estimated by a magnetic pole position estimation circuit without using a magnetic pole position sensor.

Generation torque is represented by vector product of magnetic flux and current regardless of a DC machine or an AC machine (T = Φm^{∗}I^{∗}sinθ). In this case, because an electric angle between the magnetic flux Φm and the armature current Ia is controlled to θ = 90°, the generation torque becomes T = Φm^{∗}Ia^{∗}sin90° = Φm^{∗}Ia. In this case, the armature current Ia corresponds to a torque current component Iq.

The current detectors CTs detect the line current of the permanent magnet synchronous motor, a dq-axis conversion unit converts the detected current into current in orthogonal "d" and "q" axes, and the resulting current is decomposed into an excitation current component Id and a torque current component Iq.

If a weak field control or the like is not conducted, a d-axis current command flowing in the direction of the magnetic flux Φm is set to Id* = 0, and a circuit for d-axis current control operates so that the detected excitation current component Id is always 0. Controlled in this manner, the armature current Ia flowing through the permanent magnet synchronous motor is controlled as a torque current component Iq by operation of a q-axis current control system. In other words, the armature current Ia flowing through the permanent magnet synchronous motor can be operated as a torque current component proportional to the generation torque of the motor.

In a weak field region, the d-axis current command is set to Id*<0, and the magnetic flux Φm generated by the attached magnet is reduced (Φd = Φm-k^{∗}Id). In order to reduce the magnetic flux Φm, the phase of the armature current Ia flowing through the permanent magnet synchronous motor should be controlled to 90° or more (θ>90°).

Generally, because a time required to detect the magnetic pole position is from hundreds milliseconds to several seconds, detecting the magnetic pole position each time at a startup causes an increased tact time in the case of load applications that frequently repeat a start and a stop, and is not a desirable estimation mode.

For example, in the case of a permanent magnet synchronous motor with a mechanical brake, however, the motor does not rotate through inertia nor is rotated by a load after a stop because the brake is applied without fail when the motor is stopped; therefore, the magnetic pole position detected through estimation is not changed. Consequently, it is not necessary to detect the magnetic pole position each time before initiating a startup from a stop state, and it is possible to start the permanent magnet synchronous motor using magnetic pole position estimation data at the time point of a stop after initiating the startup.

In other words, depending on a system configuration, it is not necessary to detect the magnetic pole position each time, and there is an application that can be controlled using magnetic pole position estimation data at the time point of a stop after initiating a startup.

In the case of such an application, it is solvable by storing the magnetic pole position estimation data at the time point of a stop after initiating a startup in a memory.

As a matter of course, in the case where power supply to the power conversion device is not cut off, the magnetic pole position estimation data is simply stored in the memory (for example, a RAM), but in the case where power supply is cut off, if the data is only stored in the memory, the estimated information on the magnetic pole position will be lost when power supply is cut off. Consequently, the magnetic pole position at the time of a stop after initiating a startup is stored in a nonvolatile memory each time when power supply is cut off. Such a configuration allows the permanent magnet synchronous motor to be started using the information on the magnetic pole position stored in the nonvolatile memory when power is turned on.

Storing the data in the memory is processed by the control arithmetic circuit device 4 (for example, a microcomputer) according to a command from the digital operation panel 7 or the upper-level device 12.

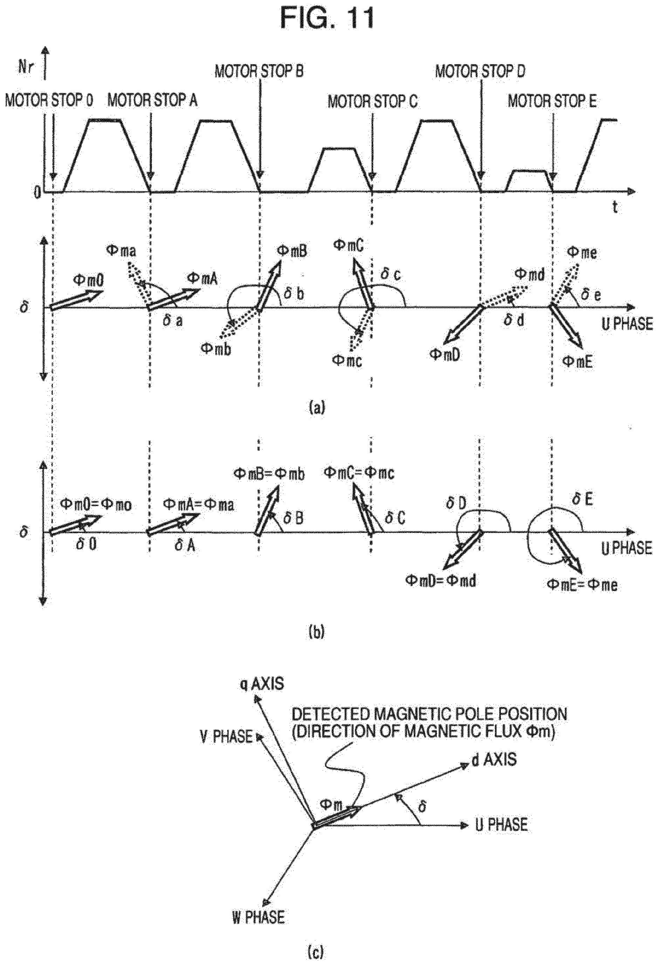

Fig. 11 is an explanatory diagram of magnetic pole position detection according to the embodiment. (c) shows an explanatory diagram of what the detected magnetic pole position is a position on the basis of. An angle δ of a magnetic pole position detected on the basis of the U phase of an armature winding of a three-phase permanent magnet synchronous motor is determined.

The angle δ of the magnetic pole position is set as the "d" axis on control, and a right angle direction to the "d" axis is set as the "q" axis on control. For example, if weak field control or the like is not conducted, the armature current Ia is controlled so as to only flow through the "q" axis on control. In other words, the detected magnetic pole position is the angle δ (direction of the magnetic flux Φm) on the basis of the U phase of the armature winding, and the angle δ of the magnetic pole position (magnetic pole position estimation data) is stored in the memory. In the embodiment, the explanation is given on the basis of the U phase of the armature winding, but the basis may be the V phase or the W phase. In addition, an imaginary reference axis may be set, and the angle δ of the magnetic pole position detected on the basis of that axis may be determined.

Naturally, the control arithmetic device 4 (for example, a microcomputer) inside the power conversion device detects the magnetic pole position of the synchronous motor, and controls the synchronous motor according to the detected value; therefore, it always recognizes the magnetic pole position of the synchronous motor. In other words, the control arithmetic device 4 always recognizes which angle δ the magnetic pole position is while the synchronous motor is rotating controlled by the power conversion device. Consequently, the control arithmetic device 4 also recognizes the angle δ of the magnetic pole position at the time point when the synchronous motor is stopped.

If the synchronous motor rotates through inertia when it is stopped once, or it is rotated by wind through a fan or the like after a stop, however, there arises difference between the magnetic pole position recognized by the control arithmetic device 4 and an actual magnetic pole position (change in the magnetic pole position by rotation after the stop). Consequently, the control arithmetic device 4 cannot get hold of the actual magnetic pole position of the synchronous motor.

The explanation is given of making the angle δ into the magnetic pole position on the basis of the U phase, but there are many methods for detecting the magnetic pole position (direction of the magnetic flux Φm). Therefore, the example is only one example, and does not limit determination methods for the magnetic pole position (direction of the magnetic flux Φm) or the angle δ of the magnetic pole position. In fact, the angle δ of the magnetic pole position may be not an actual angle as long as it can define the position of the magnetic pole.
(a) shows an example indicating the magnetic pole position in the case where a mechanical brake or the like is not installed relative to a startup and stop operation pattern of the synchronous motor. In the case where there is no mechanical brake or the like, the motor is started by the power conversion device and when it is stopped once, it rotates through inertia, or it is rotated by wind after the stop if it is equipped with a fan or the like; therefore, a magnetic pole position (direction of the magnetic flux Φm) ΦmA at the stop is actually moved to Φma, and the actual magnetic pole position(direction of the magnetic flux Φm) Φma is situated at a position different from the magnetic pole position (direction of the magnetic flux Φm) ΦmA recognized by the power conversion device, thereby causing the motor to go out of control.

Whenever the motor stops, there arises large difference between magnetic pole positions (direction of the magnetic flux Φm) ΦmA, ΦmB, ΦmC, ΦmD, ΦmE recognized by the power conversion device and actual magnetic pole positions (direction of the magnetic flux Φm) Φma, Φmb, Φmc, Φmd, Φme at respective time points. The magnetic pole positions recognized by the power conversion device are different from the actual magnetic pole positions, which causes an impossible state of controlling the synchronous motor. For this reason, in such a system that depends on a load, the magnetic pole position must be correctly detected each time before initiating a startup from the stop state, and it is necessary to control the motor according to the detected actual magnetic pole position. Here, a magnetic pole position (direction of the magnetic flux Φm) Φm0 is a first magnetic pole position (initial magnetic pole position) detected at a first startup.

Even if there is no mechanical brake or the like, when the motor is started by the power conversion device and then stopped once, if it does not rotate through inertia nor is rotated by wind through a fan or the like after the stop, there is no need to detect the magnetic pole position each time; therefore, the motor does not go out of control as long as the magnetic pole position is stored in the memory and it is started using the data in the memory.
(b) shows an example indicating the magnetic pole position in the case where a mechanical brake or the like is installed relative to a startup and stop operation pattern of the synchronous motor. In the case where there is a mechanical brake, when the motor is started by the power conversion device and then stopped once, it does not rotate through inertia nor is rotated by wind through a fan or the like after the stop; therefore, the magnetic pole position (direction of the magnetic flux Φm) ΦmA when it is stopped always accords with the actual magnetic pole position (direction of the magnetic flux Φm) Φma. In this case, there is no need to correctly detect the magnetic pole position each time before initiating a startup from the stop state, and the motor does not go out of control as long as an angle δA of the magnetic pole position (direction of the magnetic flux Φm) ΦmA at a motor stop A is stored in the memory and it is started using the data.

In other words, angles of the magnetic pole positions at a motor stop 0 (initial magnetic pole position), motor stop B, motor stop C, motor stop D, motor stop E, i.e. an angle δ0 for the time point of motor stop 0, an angle δB for the time point of motor stop B, an angle 8C for the time point of motor stop C, an angle δD for the time point of motor stop D, and an angle δE for the time point of motor stop E are stored in the memory, and when the motor is started from the respective time points of stop, as long as it is started using the corresponding magnetic pole position estimation data stored in the memory, the motor does not go out of control. In other words, it means that what is used is the magnetic pole position estimation data δ0 when it is started from the time point of motor stop 0, the magnetic pole position estimation data δA when it is started from the time point of motor stop A, the magnetic pole position estimation data δB when it is started from the time point of motor stop B, the magnetic pole position estimation data δC when it is started from the time point of motor stop C, the magnetic pole position estimation data δD when it is started from the time point of motor stop D, and the magnetic pole position estimation data δE when it is started from the time point of motor stop E.

The motor stop 0, motor stop A, motor stop B, motor stop C, motor stop D, and motor stop E may be considered as time points when output of the power conversion device is stopped.

Depending on a system configuration, there is a case where the stop position is always fixed. In this case, because the motor always stops at the same position, it is also possible to store the angle δ0 of the magnetic pole position (direction of the magnetic flux Φm) Φm0 at the time point of motor stop 0 (initial magnetic pole position) in the memory, and starts the motor using the magnetic pole position estimation data. As a matter of course, in the case of such a system, the angle of a magnetic pole position stored in the memory may be δA or δB or 8C or δD or δE.

The magnetic pole position estimation data stored in the memory is not limited to the first magnetic pole position (initial magnetic pole position) estimation data. According to a system configuration, the user may decide which state the magnetic pole position estimation data detected at is stored in the memory, and the magnetic pole position estimation data to be stored is not limited to the magnetic pole position (initial magnetic pole position) data detected at the first startup when the system is driven.

As described above, being able to select the motor is started either by detecting the magnetic pole position each time before initiating a startup from the stop state or by using the magnetic pole position estimation data stored in the memory depending on a system can contribute to optimization of the tact time of the system and improve the freedom of choice in the system configuration; therefore, users' merits are extremely large.

According to the above, a determination processing unit performs determination processing of whether the power conversion device detects a magnetic pole estimation position at the time point of a stop after initiating a startup, stores the magnetic pole position estimation data in the memory, and starts the motor using the estimation data stored in the memory after that or performs magnetic pole position detection each time at a startup, and starts the motor using the magnetic pole position estimation data. In other words, in the case of starting the motor using "the data stored in the memory," the determination processing unit operates so as to make the data valid (adopting as data) in the memory storing the magnetic pole position estimation data detected by the magnetic pole position estimation circuit at the time point of the stop after initiating the startup, and so as not to select the data (not adopting as data) detected by the magnetic pole position estimation circuit. In the case of starting the motor using "the data estimated at a startup each time," the determination processing unit operates so as to make the magnetic pole position estimation data detected by the magnetic pole position estimation circuit each time at a startup valid (adopting as data), and so as not to select the data stored in the memory (not adopting as data).

As a matter of course, in the case where power supply to the power conversion device is not cut off, the magnetic pole position estimation data is simply stored in the memory (for example, a RAM), and in the case where power supply is cut off, the magnetic pole position estimation data at the time point of the stop after initiating the startup may be stored in a nonvolatile memory each time when power supply is cut off.

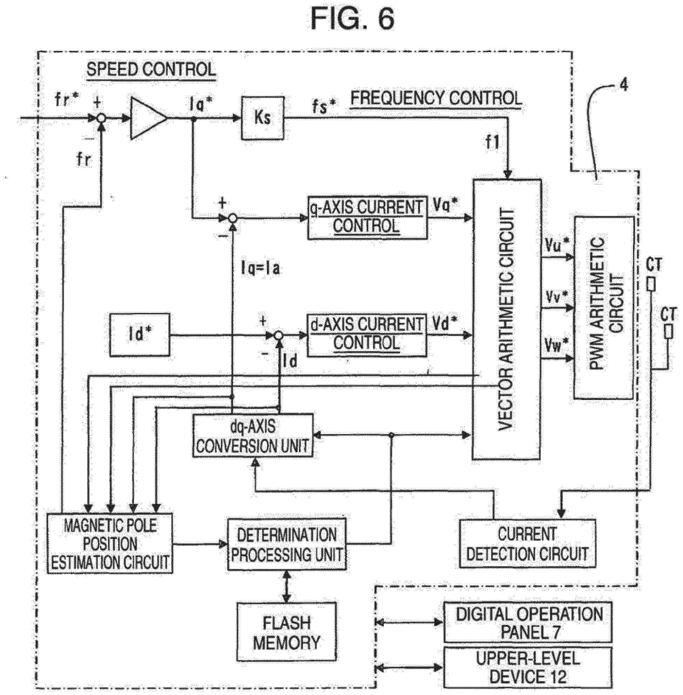

Fig. 6 is another control block diagram of the power conversion device according to the embodiment. Constituents common to and the same functions as Fig. 4 are given the same reference numerals. Difference from Fig. 4 is in that Fig. 6 has a configuration of storing the magnetic pole position detection data in a flash memory inside a microcomputer as the memory. It is also possible to perform the same control as Fig. 4 in the configuration in Fig. 6.

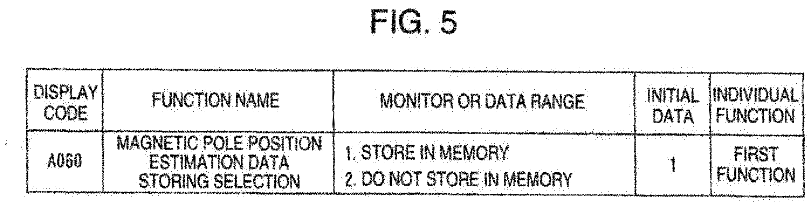

Fig. 5 is a display example of a digital operation panel according to the embodiment. The display example consists essentially of a display code, a function name, a monitor or data range, and initial data. When "A060" is selected from display codes by the digital operation panel, the function name is a "magnetic pole position estimation data storing selection" field, and an operator can select setting at will such that if the operator selects "1" from "monitor or data range," "store in the memory" is set, and if the operator selects "2," "do not store in the memory" is set. In addition, "initial data" is a default value when the power conversion device was shipped. Obviously, "A060" can be selected from the upper-level device 12 in the same manner.

"Store in the memory" means, for example, in the case of a system configuration of driving a permanent magnet synchronous motor with a mechanical brake, to detect an initial magnetic pole position and after that to store a magnetic pole position at the time point of a stop after initiating a startup in the memory each time. It means to start the motor each time using the estimation data stored in the memory per stop, and not to perform magnetic pole position detection each time at a startup.

As a matter of course, depending on a system configuration, there is a case where the stop position is always fixed. In this case, because a motor always stops at the same position, it is also possible to store the angle δA of the magnetic pole position (direction of the magnetic flux Φm) ΦmA at the motor stop A in the memory, and to start the motor using the magnetic pole position estimation data. In the case of such a system, the angle of a magnetic pole position stored in the memory may be δ0 or δB or δC or δD or δE, and there is no chance of going out of control as long as starting the motor using that data.

So that the user is able to check the magnetic pole position estimation data with eyes, the display unit provided at the digital operation panel 7 or the upper-level device 12 displays the magnetic pole position estimation data read out from the memory. In addition, "do not store in the memory" means to detect the magnetic pole position by the magnetic pole position estimation circuit each time at a startup, and to start the motor using the magnetic pole position estimation data.

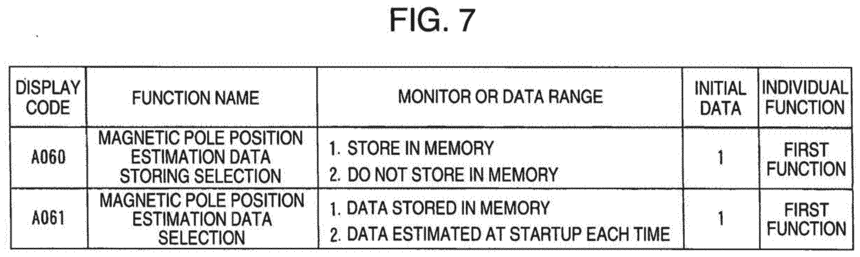

Fig. 7 is another display example of the digital operation panel. The display example consists essentially of a display code, a function name, a monitor or data range, and initial data. When "A060" is selected from lots of prepared display codes by the digital operation panel, the function name is a "magnetic pole position estimation data storing selection" field, and an operator can select use at will such that if the operator selects "1" from "monitor or data range," "store in the memory" is used, and if the operator selects "2," "do not store in the memory" is used. In addition, "initial data" is a default value when the power conversion device was shipped.

When "A061" is selected from the prepared display codes by the digital operation panel, the function name is a "magnetic pole position estimation data selection" field, and the operator can select use at will such that if the operator selects "1" from "monitor or data range," "data stored in the memory" is used, and if the operator selects "2," "data estimated at a startup each time" is used. In addition, "initial data" is a default value when the power conversion device was shipped.

Obviously, "A060" and "A061" can be also selected from the upper-level device 12 in the same manner. In other words, depending on the system configuration at the user, the user can select, as the magnetic pole position detection data, either using the initial magnetic pole position detection data stored in the memory or using the magnetic pole position estimation data detected by the magnetic pole position estimation circuit each time at a startup.

### EMBODIMENT 2

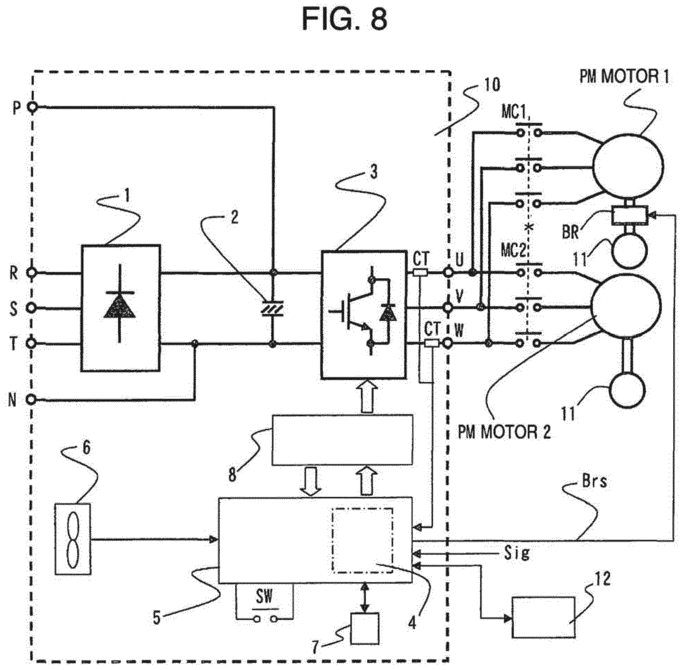

Fig. 8 is a configuration diagram of a power conversion device according to Embodiment 2. Constituents common to and the same functions as Fig. 1 in Embodiment 1 are given the same reference numerals. It is a system configuration in which a PM motor 1 (hereinafter called a permanent magnet synchronous motor 1) is equipped with a mechanical brake BR, and a PM motor 2 (hereinafter called a permanent magnet synchronous motor 2) is not equipped with a mechanical brake BR. The permanent magnet synchronous motor 1 and the permanent magnet synchronous motor 2 may be the same model of motors, and may be motors with different capacity from each other. In a matter of course, there is no limitation on the number of motors.

Electromagnetic contactors MC1 and MC2 are mechanically and electrically interlocked and are designed so as not to be on at the same time. When the MC1 is in an on state, the MC2 is in an off state without fail.

This is a case where one power conversion device 10 selectively drives any one of the two permanent magnet synchronous motors. "Sig" is a signal to select any one of the two permanent magnet synchronous motors. In addition, "Brs" is an on-or-off signal from the power conversion device to the mechanical break BR, and when the power conversion device stops output, it outputs an on signal to the mechanical break BR to operate the break. Obviously, on-and-off control of the mechanical break BR may be performed from the outside other than the power conversion device.

In the case of this system configuration, because the permanent magnet synchronous motor 1 puts on the brake without fail when the motor stops, the motor does not rotate through inertia nor is rotated by a load at the stop; therefore, the power conversion device does not need to detect the magnetic pole position each time before initiating a startup from a stop, and is able to start the permanent magnet synchronous motor from the stop using the initial magnetic pole position estimation data detected at the first time and stored in the (nonvolatile) memory.

On the other hand, because the permanent magnet synchronous motor 2 is not equipped with a brake, the power conversion device is able to start the permanent magnet synchronous motor from a stop using the magnetic pole position estimation data detected by the magnetic pole position estimation circuit each time before initiating a startup from a stop.

For example, if the "Sig" signal is "High," the permanent magnet synchronous motor 1 is selected, and it is possible to start it using the initial magnetic pole position estimation data stored in the (nonvolatile) memory. If the "Sig" signal is "Low," the permanent magnet synchronous motor 2 is selected, and it is possible to detect the magnetic pole position each time at a startup, and to start it using the detected data.

In addition, "SW" is a hardware switch for selecting either driving the permanent magnet synchronous motors using the magnetic pole position estimation data stored in the memory or starting the permanent magnet synchronous motor using the magnetic pole position estimation data detected by the magnetic pole position estimation circuit each time at a startup of the permanent magnet synchronous motor. In the case of a configuration in which the digital operation panel 7 is installed remotely, if the power conversion device is provided with the hardware switch SW, the user is able to enjoy an advantage of being able to simply select either one of the two permanent magnet synchronous motors by the hardware switch SW on the power conversion device without using the digital operation panel 7 installed remotely.

In the embodiment, in the case of the permanent magnet synchronous motor 2 not equipped with a brake, although the explanation is given of starting the permanent magnet synchronous motor using the magnetic pole position estimation data detected by the magnetic pole position estimation circuit each time at a startup, it is not intended to limit presence or absence of a brake. In other words, if it is not a system in which a motor rotates through inertia due to external force or the like, or is rotated by a load at a stop, it is not necessary to detect the magnetic pole position by the magnetic pole position estimation circuit each time at a startup, and the motor can be started using the magnetic pole position estimation data stored in the memory.

Consequently, the freedom of selection can be increased if the user is enabled to select either starting the motor using magnetic pole position estimation data stored in the memory or detecting magnetic pole position estimation data by the magnetic pole position estimation circuit each time at a startup, depending on the system configuration.

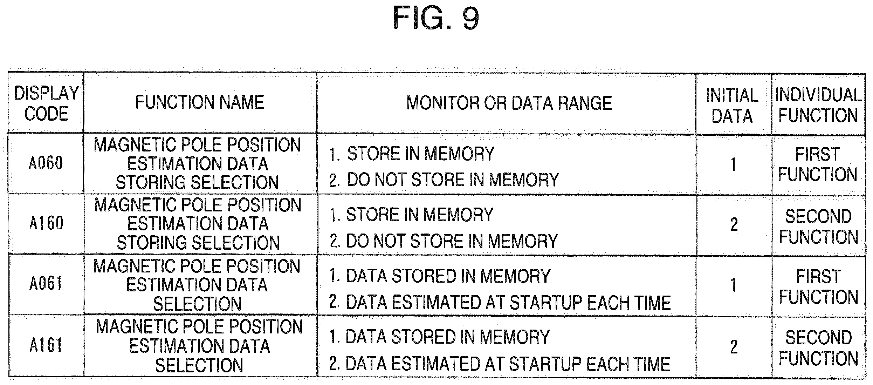

Fig. 9 is a display example of a digital operation panel according to Embodiment 2. The display example is a selection display example at the digital operation panel of the magnetic pole position estimation data of the permanent magnet synchronous motor 1 and the permanent magnet synchronous motor 2 in the system configuration shown in Fig. 8, and is configured by a software switch.

In the same manner as before, the display example consists essentially of a display code, a function name, a monitor or data range, and initial data. The display codes "A060" and "A061" show a selection field of the magnetic pole position estimation data of the permanent magnet synchronous motor 1 as a first function, and display codes "A160" and "A161" show a selection field of the magnetic pole position estimation data of the permanent magnet synchronous motor 2 as a second function. In the example, because "A060" and "A061" corresponding to the first function both have "1," the permanent magnet synchronous motor 1 is driven using the initial magnetic pole position estimation data stored in the memory, and because "A160" and "A161" corresponding to the second function both have "2," the permanent magnet synchronous motor 2 is driven using the magnetic pole position estimation data detected by the magnetic pole position estimation circuit each time at a startup.

In other words, by providing the first function and the second function like this, and making them selectable from the digital operation panel, one power conversion device is enabled to operate the two permanent magnet synchronous motors in different modes (magnetic pole position estimation data stored in the memory or magnetic pole position estimation data detected by the magnetic pole position estimation circuit each time).

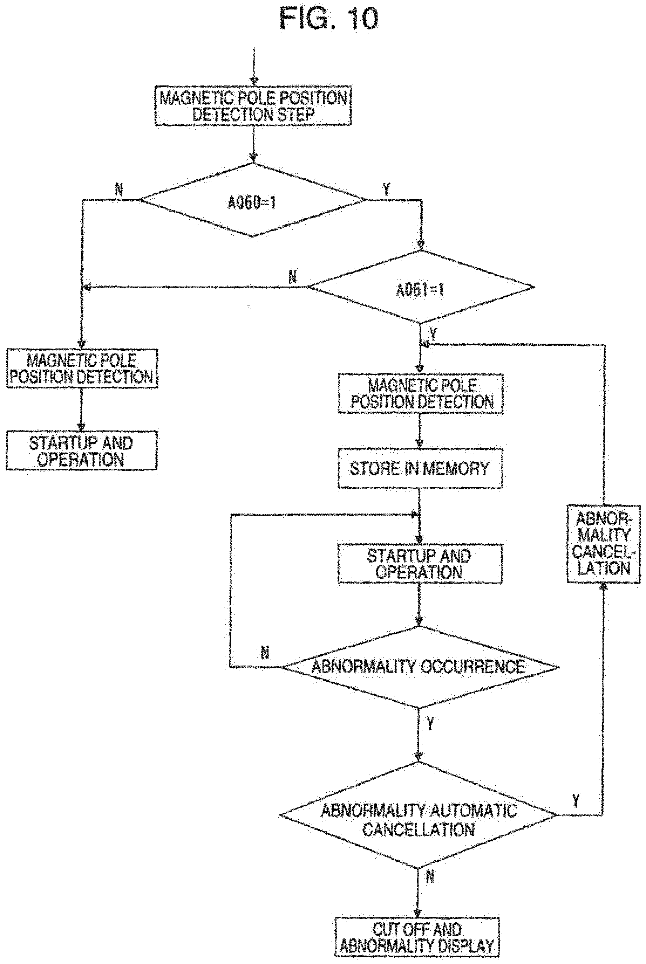

In the embodiment, the explanation is given using an example of two permanent magnet synchronous motors, but it is not intended to limit the number of driven motors. In the case of n motors, it only requires to provide a first function to an nth function. Fig. 10 is an example of a control flowchart applied to the power conversion devices in Embodiment 1 and Embodiment 2.

Before operating a permanent magnet synchronous motor, confirmation is made to check whether the display code "A060" is "1," and if it is not "1," which is setting "not to store the magnetic pole position estimation data in the memory;" therefore, a startup is initiated using the magnetic pole position estimation data detected by the magnetic pole position estimation circuit each time before initiating a startup from a stop.

On the other hand, if the display code "A060" is "1," confirmation is made to check whether the display code "A061" is "1," and if it is not "1," which is setting to use "data estimated at a startup each time;" therefore, the magnetic pole position is detected each time before initiating a startup from a stop, and the startup is initiated using the magnetic pole position estimation data. If it is "1," "data stored in the memory" is used; therefore, the magnetic pole position is detected before operation of the motor only at the first time, and the magnetic pole position estimation data is stored in the memory, and a startup is initiated using the stored data. Then, an estimation magnetic pole position when the motor is stopped is stored in the memory, it only needs to refer to the magnetic pole position data in the memory at a startup at the second time or later.

For example, in the case where maintenance of the brake is performed in maintenance, however, the magnetic pole position is changed due to the rotation of a rotor. In this state, if the motor is started using the magnetic pole position estimation data stored in the memory, abnormal current flows through the permanent magnet synchronous motor because the actual magnetic pole position is different from the magnetic pole position estimation, and excess current makes the power conversion device trip (cut off). In this case, abnormal trip is automatically cancelled, the magnetic pole position is detected again, the magnetic pole position estimation data is stored in the memory, and a startup is initiated again using the stored data.

If the power conversion device has a function to automatically cancel such abnormal trip at a startup of the permanent magnet synchronous motor, it does not let abnormal current flow at a startup of the permanent magnet synchronous motor; therefore, there is an advantage of removing worry about excess current making the power conversion device trip (cut off) and causing careless system down.

As a matter of course, this uses a function to be able to select setting in advance at the digital operation panel, when the permanent magnet synchronous motor is started, from setting of: operating the abnormal trip automatic cancellation function at a startup, and re-estimating the magnetic pole position of the synchronous motor by the estimation means; and disabling the abnormal trip automatic cancellation function, performing abnormal trip display (power conversion device cut-off state) and following determination processing by the user. Obviously, the setting can be also selected in advance from the upper-level device 12 in the same manner.

In the embodiment, the explanation is given of the first function in the case of operating one permanent magnet synchronous motor, but if there are n motors, it only needs to provide a first function to an nth function.

As is indicated by the above embodiments, the embodiments enable an operation panel or an upper-level device to select either driving the permanent magnet synchronous motor using the magnetic pole position estimation data stored in the memory or estimating the magnetic pole position of the permanent magnet synchronous motor by the estimation means for estimating a magnetic pole position at a startup of the permanent magnet synchronous motor; and thereby have large users' merits of being able to provide the power conversion device and the control method for the permanent magnet synchronous motor that are capable of using magnetic pole position estimation data suitable for a load application determined by a system configuration without taking a magnetic pole position estimation time.

### REFERENCE SIGNS LIST

- 1: Forward converter
- 2: Smoothing capacitor
- 3: Inverse converter
- 4: Control arithmetic device
- 5: Control circuit
- 6: Cooling fan
- 7: Digital operation panel
- 8: Drive circuit
- 9: Voltage detection circuit
- 10: Power conversion device
- 11: Load device
- CT: Current detector
- SH1, SHi, SHd: Shunt resistor for current detection at DC bus bar side
- BR: Mechanical brake
- Sig: Synchronous motor selection signal
- Brs: Brake BR on-or-off signal
- PM motor: Permanent magnet synchronous motor
- MC1, MC2: Electromagnetic contactor
- SW: Hardware switch

## Claims

1. A power conversion device (10) that comprises a power conversion unit for converting direct current into alternating current and that performs variable speed control of a synchronous motor (PM motor) in which a permanent magnet is used, comprising:
a current detection circuit (CT) for detecting current flowing through the synchronous motor (PM motor);
estimation means for estimating a magnetic pole position of the synchronous motor (PM motor) at a startup of the synchronous motor; **characterized by**
a nonvolatile memory for storing magnetic pole position estimation data indicating a magnetic pole position at a stop of the synchronous motor (PM motor),
wherein when power supply to the power conversion device (10) is cut off, the magnetic pole position estimation data at a stop of the synchronous motor (PM motor) is stored in the nonvolatile memory;
selection means for enabling a user to select either magnetic pole position estimation data stored in the nonvolatile memory or magnetic pole position estimation data obtained by the estimation means, and
a control unit (5) for driving the synchronous motor (PM motor) using the magnetic pole position estimation data selected by the user via the selection means; and
an operation panel (7) for setting an operation condition of the power conversion device (10), wherein
the operation panel (7) enables selection by a user of either
(1) driving the synchronous motor (PM motor) using the magnetic pole position estimation data stored in the nonvolatile memory, if the synchronous motor (PM motor) is provided with a mechanical brake; or
(2) driving the synchronous motor by estimating the magnetic pole position of the synchronous motor by the estimation means for estimating a magnetic pole position at a startup of the synchronous motor, if the synchronous motor (PM motor) rotates through inertia or by a load after a stop.

2. The power conversion device (10) according to Claim 1, wherein
when abnormality occurs at a startup of the synchronous motor (PM motor), the control unit (5) performs any of abnormal trip automatic cancelling to re-estimate the magnetic pole position of the synchronous motor by the estimation means or abnormal trip display and shift of the power conversion device (10) into a cut-off state.

3. The power conversion device (10) according to Claim 1, comprising
an upper-level device (12) for setting an operation condition of the power conversion device (10), wherein
the upper-level device (12) enables selection of either driving the synchronous motor (PM motor) using the magnetic pole position estimation data stored in the memory or driving the synchronous motor by estimating the magnetic pole position of the synchronous motor by the estimation means for estimating a magnetic pole position at a startup of the synchronous motor.

4. The power conversion device (10) according to Claim 1, comprising
a hardware switch (SW) for selecting either driving the synchronous motor (PM motor) using the magnetic pole position estimation data stored in the memory or driving the synchronous motor by estimating the magnetic pole position of the synchronous motor by the estimation means for estimating a magnetic pole position at a startup of the synchronous motor.

5. The power conversion device (10) according to Claim 2, wherein
when abnormality occurs at a startup of the synchronous motor (PM motor), the operation panel (7) enables selection of either performing abnormal trip automatic cancelling to re-estimate the magnetic pole position of the synchronous motor by the estimation means or performing abnormal trip display and shifting the power conversion device (10) into a cut-off state.

6. The power conversion device (10) according to Claim 2, comprising
an upper-level device (12) for setting an operation condition of the power conversion device (10), wherein
when abnormality occurs at a startup of the synchronous motor (PM motor), the upper-level device (12) enables selection of either performing abnormal trip automatic cancelling to re-estimate the magnetic pole position of the synchronous motor by the estimation means or performing abnormal trip display and shifting the power conversion device (10) into a cut-off state.

7. The power conversion device (10) according to Claim 1, comprising
a display unit for displaying the magnetic pole position estimation data read out from the memory.

8. The power conversion device (10) according to Claim 7, wherein
the display unit is provided at the operation panel (7) or the upper-level device (12).

9. A control method for performing variable speed control of a synchronous motor (PM motor) in which a permanent magnet is used, comprising:
a step of converting direct current into alternating current;
a current detection step of detecting current flowing through the synchronous motor (PM motor);
an estimation step of estimating a magnetic pole position of the synchronous motor at a startup of the synchronous motor (PM motor); **characterized by**
a step of storing magnetic pole position estimation data at a stop of the synchronous motor (PM motor) in a nonvolatile memory,
wherein when power supply to the power conversion device (10) is cut off, the magnetic pole position estimation data at a stop of the synchronous motor (PM motor) is stored in the nonvolatile memory; and
a control step of driving the synchronous motor (PM motor) according to user selection of either
(1) driving the synchronous motor using the magnetic pole position estimation data stored in the nonvolatile memory, if the synchronous motor (PM motor) is provided with a mechanical brake, or
(2) driving the synchronous motor using the magnetic pole position of the synchronous motor estimated by the estimation means for estimating a magnetic pole position at a startup of the synchronous motor, if the synchronous motor (PM motor) rotates through inertia or by a load after a stop.

10. The control method for a permanent magnet synchronous motor (PM motor) according to Claim 9, wherein
when power supply to a device for performing variable speed control of the synchronous motor (PM motor) is cut off, the magnetic pole position estimation data at a stop of the synchronous motor is stored in the nonvolatile memory.

11. The control method for a permanent magnet synchronous motor (PM motor) according to any of Claims 9 and 10, wherein
when abnormality occurs at a startup of the permanent magnet synchronous motor (PM motor), control is performed by selecting either operating an abnormal trip automatic cancelling function and re-estimating the magnetic pole position of the synchronous motor by the estimation means or disabling the abnormal trip automatic cancelling function and performing abnormal trip display.

## Patentansprüche

1. Leistungsumwandlungsvorrichtung (10), die eine Leistungsumwandlungseinheit zur Umwandlung von Gleichstrom in Wechselstrom umfasst und eine Steuerung der variablen Drehzahl eines Synchronmotors (PM-Motors), in welchem ein Permanentmagnet verwendet wird, ausführt, umfassend:
eine Stromdetektionseinheit (CT) zum Detektieren von Strom, der durch den Synchronmotor (PM-Motor) fließt;
ein Schätzungsmittel zum Schätzen einer Magnetpolposition des Synchronmotors (PM-Motors) beim Anlaufen des Synchronmotors; **gekennzeichnet durch**
einen nichtflüchtigen Speicher zum Speichern von Magnetpolposition-Schätzungsdaten, die eine Magnetpolposition bei einem Anhalten des Synchronmotors (PM-Motors) angeben,
wobei bei Unterbrechung der Stromversorgung zur Leistungsumwandlungsvorrichtung (10) die Magnetpolposition-Schätzungsdaten bei einem Anhalten des Synchronmotors (PM-Motors) im nichtflüchtigen Speicher gespeichert werden;
Auswahlmittel, die es einem Benutzer ermöglichen, entweder im nichtflüchtigen Speicher gespeicherte Magnetpolposition-Schätzungsdaten oder durch das Schätzungsmittel erhaltene Magnetpolposition-Schätzungsdaten auszuwählen, und
eine Steuereinheit (5) zum Ansteuern des Synchronmotors (PM-Motors) unter Verwendung der vom Benutzer mittels des Auswahlmittels ausgewählten Magnetpolposition-Schätzungsdaten und
ein Bedienfeld (7) zum Einstellen einer Betriebsbedingung der Leistungsumwandlungsvorrichtung (10), wobei
das Bedienfeld (7) es einem Benutzer ermöglicht, aus
(1) dem Ansteuern des Synchronmotors (PM-Motors) unter Verwendung der im nichtflüchten Speicher gespeicherten Magnetpolposition-Schätzungsdaten, wenn der Synchronmotor (PM-Motor) mit einer mechanischen Bremse ausgestattet ist; oder
(2) dem Ansteuern des Synchronmotors durch Schätzen der Magnetpolposition des Synchronmotors durch das Schätzungsmittel zum Schätzen der Magnetpolposition beim Anlaufen des Synchronmotors, wenn sich der Synchronmotor (PM-Motor) durch Trägheit oder durch eine Last nach einem Anhalten dreht, auszuwählen.

2. Leistungsumwandlungsvorrichtung (10) nach Anspruch 1, wobei
wenn eine Anomalie beim Anlaufen des Synchronmotors (PM-Motors) auftritt, die Steuereinheit (5) eines aus einer automatischen Annullierung des anomalen Ausfalls, um die Magnetpolposition des Synchronmotors erneut durch das Schätzungsmittel zu schätzen, oder des Anzeigens des anomalen Ausfalls und Umschalten der Leistungsumwandlungsvorrichtung (10) in einen Unterbrechungszustand ausführt.

3. Leistungsumwandlungsvorrichtung (10) nach Anspruch 1, umfassend:
eine übergeordnete Vorrichtung (12) zum Einstellen einer Betriebsbedingung der Leistungsumwandlungsvorrichtung (10), wobei
die übergeordnete Vorrichtung (12) das Auswählen entweder des Ansteuerns des Synchronmotors (PM-Motors) unter Verwendung der im Speicher gespeicherten Magnetpolposition-Schätzungsdaten oder des Ansteuerns des Synchronmotors durch Schätzen der Magnetpolposition des Synchronmotors durch das Schätzungsmittel zum Schätzen der Magnetpolposition beim Anlaufen des Synchronmotors ermöglicht.

4. Leistungsumwandlungsvorrichtung (10) nach Anspruch 1, umfassend:
einen Hardware-Schalter (SW) zum Auswählen entweder des Ansteuerns des Synchronmotors (PM-Motors) unter Verwendung der im Speicher gespeicherten Magnetpolposition-Schätzungsdaten oder des Ansteuerns des Synchronmotors durch Schätzen der Magnetpolposition des Synchronmotors durch das Schätzungsmittel zum Schätzen der Magnetpolposition beim Anlaufen des Synchronmotors.

5. Leistungsumwandlungsvorrichtung (10) nach Anspruch 2, wobei
wenn eine Anomalie beim Anlaufen des Synchronmotors (PM-Motors) auftritt, das Bedienfeld (7) das Auswählen entweder des Durchführens einer automatischen Annullierung des anomalen Ausfalls, um die Magnetpolposition des Synchronmotors erneut durch das Schätzungsmittel zu schätzen, oder des Durchführens des Anzeigens des anomalen Ausfalls und Umschaltens der Leistungsumwandlungsvorrichtung (10) in einen Unterbrechungszustand ermöglicht.

6. Leistungsumwandlungsvorrichtung (10) nach Anspruch 2, umfassend:
eine übergeordnete Vorrichtung (12) zum Einstellen einer Betriebsbedingung der Leistungsumwandlungsvorrichtung (10), wobei
wenn eine Anomalie beim Anlaufen des Synchronmotors (PM-Motors) auftritt, die übergeordnete Vorrichtung (12) das Auswählen entweder des Durchführens einer automatischen Annullierung des anomalen Ausfalls, um die Magnetpolposition des Synchronmotors erneut durch das Schätzungsmittel zu schätzen, oder des Durchführens des Anzeigens des anomalen Ausfalls und Umschaltens der Leistungsumwandlungsvorrichtung (10) in einen Unterbrechungszustand ermöglicht.

7. Leistungsumwandlungsvorrichtung (10) nach Anspruch 1, umfassend:
eine Anzeigeeinheit zum Anzeigen der aus dem Speicher ausgelesenen Magnetpolposition-Schätzungsdaten.

8. Leistungsumwandlungsvorrichtung (10) nach Anspruch 7, wobei
die Anzeigeeinheit am Bedienfeld (7) oder an der übergeordneten Vorrichtung (12) bereitgestellt ist.

9. Steuerverfahren zum Durchführen einer Steuerung der variablen Drehzahl eines Synchronmotors (PM-Motors), in welchem ein Permanentmagnet verwendet wird, umfassend:
einen Schritt des Umwandelns von Gleichstrom in Wechselstrom,
einen Stromdetektionsschritt des Detektierens von Strom, der durch den Synchronmotor (PM-Motor) fließt;
einen Schätzungsschritt des Schätzens einer Magnetpolposition des Synchronmotors beim Anlaufen des Synchronmotors (PM-Motors); **gekennzeichnet durch**
einen Schritt des Speicherns von Magnetpolposition-Schätzungsdaten bei einem Anhalten des Synchronmotors (PM-Motors) in einem nichtflüchtigen Speicher,
wobei bei Unterbrechung der Stromversorgung zur Leistungsumwandlungsvorrichtung (10) die Magnetpolposition-Schätzungsdaten bei einem Anhalten des Synchronmotors (PM-Motors) im nichtflüchtigen Speicher gespeichert werden; und
einen Steuerschritt des Ansteuerns des Synchronmotors (PM-Motors) gemäß einer Benutzerauswahl aus entweder
(1) dem Ansteuern des Synchronmotors (PM-Motors) unter Verwendung der im nichtflüchten Speicher gespeicherten Magnetpolposition-Schätzungsdaten, wenn der Synchronmotor (PM-Motor) mit einer mechanischen Bremse ausgestattet ist; oder
(2) dem Ansteuern des Synchronmotors unter Verwendung der Magnetpolposition des Synchronmotors, die durch das Schätzungsmittel zum Schätzen der Magnetpolposition beim Anlaufen des Synchronmotors geschätzt wird, wenn sich der Synchronmotor (PM-Motor) durch Trägheit oder durch eine Last nach einem Anhalten dreht.

10. Steuerverfahren für einen Permanentmagnet-Synchronmotor (PM-Motor) nach Anspruch 9, wobei
wobei bei Unterbrechung der Stromversorgung zu einer Vorrichtung zur Durchführung einer Steuerung der variablen Drehzahl des Synchronmotors (PM-Motors) die Magnetpolposition-Schätzungsdaten bei einem Anhalten des Synchronmotors (PM-Motors) im nichtflüchtigen Speicher gespeichert werden.

11. Steuerverfahren für einen Permanentmagnet-Synchronmotor (PM-Motor) nach Anspruch 9 und 10, wobei
wenn eine Anomalie beim Anlaufen des Synchronmotors auftritt, eine Steuerung durchgeführt wird, indem entweder die Ausführung einer automatischen Annullierung des anomalen Ausfalls und einer neuen Schätzung der Magnetpolposition des Synchronmotors durch das Schätzungsmittel oder das Ausschalten der automatischen Annullierfunktion des anomalen Ausfalls und das Durchführen des Anzeigens des anomalen Ausfalls durchgeführt wird.

## Revendications

1. Dispositif de conversion de puissance (10) qui comprend une unité de conversion de puissance pour convertir un courant continu en courant alternatif et qui effectue une commande à vitesse variable d'un moteur synchrone (moteur PM) dans lequel un aimant permanent est utilisé, comprenant :
un circuit de détection de courant (CT) pour détecter un courant circulant à travers le moteur synchrone (moteur PM) ;
des moyens d'estimation pour estimer une position de pôle magnétique du moteur synchrone (moteur PM) lors d'un démarrage du moteur synchrone ; **caractérisé par**
une mémoire non volatile pour stocker des données d'estimation de position de pôle magnétique indiquant une position de pôle magnétique lors d'un arrêt du moteur synchrone (moteur PM),
dans lequel lorsqu'une alimentation en puissance pour le dispositif de conversion de puissance (10) est coupée, les données d'estimation de position de pôle magnétique lors d'un arrêt du moteur synchrone (moteur PM) sont stockées dans la mémoire non volatile ;
des moyens de sélection pour permettre à un utilisateur de sélectionner des données d'estimation de position de pôle magnétique stockées dans la mémoire non volatile ou des données d'estimation de position de pôle magnétique obtenues par les moyens d'estimation, et
une unité de commande (5) pour entraîner le moteur synchrone (moteur PM) en utilisant les données d'estimation de position de pôle magnétique sélectionnées par l'utilisateur via les moyens de sélection ; et
un panneau d'opération (7) pour établir une condition d'opération du dispositif de conversion de puissance (10), dans lequel
le panneau d'opération (7) permet la sélection par un utilisateur de l'une des étapes consistant à
(1) entraîner le moteur synchrone (moteur PM) en utilisant les données d'estimation de position de pôle magnétique stockées dans la mémoire non volatile, si le moteur synchrone (moteur PM) est pourvu d'un frein mécanique ; ou
(2) entraîner le moteur synchrone en estimant la position de pôle magnétique du moteur synchrone par les moyens d'estimation pour estimer une position de pôle magnétique lors d'un démarrage du moteur synchrone, si le moteur synchrone (moteur PM) tourne par inertie ou par une charge après un arrêt.

2. Dispositif de conversion de puissance (10) selon la revendication 1, dans lequel
lorsqu'une anomalie se produit lors d'un démarrage du moteur synchrone (moteur PM), l'unité de commande (5) effectue l'un quelconque parmi une annulation automatique de déclenchement anormal pour réestimer la position de pôle magnétique du moteur synchrone par les moyens d'estimation ou un affichage de déclenchement anormal et une commutation du dispositif de conversion de puissance (10) dans un état de coupure.

3. Dispositif de conversion de puissance (10) selon la revendication 1, comprenant
un dispositif de niveau supérieur (12) pour établir une condition d'opération du dispositif de conversion de puissance (10), dans lequel
le dispositif de niveau supérieur (12) permet de sélectionner l'entraînement du moteur synchrone (moteur PM) à l'aide des données d'estimation de position de pôle magnétique stockées dans la mémoire ou l'entraînement du moteur synchrone en estimant la position de pôle magnétique du moteur synchrone par les moyens d'estimation pour estimer une position de pôle magnétique lors d'un démarrage du moteur synchrone.

4. Dispositif de conversion de puissance (10) selon la revendication 1, comprenant
un commutateur matériel (SW) pour sélectionner l'entraînement du moteur synchrone (moteur PM) à l'aide des données d'estimation de position de pôle magnétique stockées dans la mémoire ou l'entraînement du moteur synchrone en estimant la position de pôle magnétique du moteur synchrone par les moyens d'estimation pour estimer un position de pôle magnétique lors d'un démarrage du moteur synchrone.

5. Dispositif de conversion de puissance (10) selon la revendication 2, dans lequel
lorsqu'une anomalie se produit lors d'un démarrage du moteur synchrone (moteur PM), le panneau d'opération (7) permet de sélectionner l'exécution d'une annulation automatique de déclenchement anormal pour réestimer la position de pôle magnétique du moteur synchrone par les moyens d'estimation ou l'exécution d'un affichage de déclenchement anormal et d'une commutation du dispositif de conversion de puissance (10) dans un état de coupure.

6. Dispositif de conversion de puissance (10) selon la revendication 2, comprenant
un dispositif de niveau supérieur (12) pour établir une condition d'opération du dispositif de conversion de puissance (10), dans lequel
lorsqu'une anomalie se produit lors d'un démarrage du moteur synchrone (moteur PM), le dispositif de niveau supérieur (12) permet de sélectionner l'exécution d'une annulation automatique de déclenchement anormal pour réestimer la position de pôle magnétique du moteur synchrone par les moyens d'estimation ou l'exécution d'un affichage de déclenchement anormal et d'une commutation du dispositif de conversion de puissance (10) dans un état de coupure.

7. Dispositif de conversion de puissance (10) selon la revendication 1, comprenant
une unité d'affichage pour afficher les données d'estimation de position de pôle magnétique lues dans la mémoire.

8. Dispositif de conversion de puissance (10) selon la revendication 7, dans lequel
l'unité d'affichage est prévue sur le panneau d'opération (7) ou le dispositif de niveau supérieur (12).

9. Procédé de commande pour effectuer une commande à vitesse variable d'un moteur synchrone (moteur PM) dans lequel un aimant permanent est utilisé, comprenant :
une étape de conversion de courant continu en courant alternatif ;
une étape de détection de courant consistant à détecter un courant circulant à travers le moteur synchrone (moteur PM) ;
une étape d'estimation consistant à estimer une position de pôle magnétique du moteur synchrone lors d'un démarrage du moteur synchrone (moteur PM) ; **caractérisé par**
une étape de stockage de données d'estimation de position de pôle magnétique lors d'un arrêt du moteur synchrone (moteur PM) dans une mémoire non volatile,
dans lequel lorsqu'une alimentation en puissance pour le dispositif de conversion de puissance (10) est coupée, les données d'estimation de position de pôle magnétique lors d'un arrêt du moteur synchrone (moteur PM) sont stockées dans la mémoire non volatile ; et
une étape de commande consistant à entraîner le moteur synchrone (moteur PM) selon la sélection par utilisateur de l'une des étapes consistant à
(1) entraîner le moteur synchrone à l'aide des données d'estimation de position de pôle magnétique stockées dans la mémoire non volatile, si le moteur synchrone (moteur PM) est pourvu d'un frein mécanique ; ou
(2) entraîner le moteur synchrone à l'aide de la position de pôle magnétique du moteur synchrone estimée par les moyens d'estimation pour estimer une position de pôle magnétique lors d'un démarrage du moteur synchrone, si le moteur synchrone (moteur PM) tourne par inertie ou par une charge après un arrêt.

10. Procédé de commande pour un moteur synchrone à aimant permanent (moteur PM) selon la revendication 9, dans lequel
lorsqu'une alimentation en puissance pour un dispositif destiné à effectuer une commande à vitesse variable du moteur synchrone (moteur PM) est coupée, les données d'estimation de position de pôle magnétique lors d'un arrêt du moteur synchrone sont stockées dans la mémoire non volatile.

11. Procédé de commande pour un moteur synchrone à aimant permanent (moteur PM) selon l'une quelconque des revendications 9 et 10, dans lequel
lorsqu'une anomalie se produit lors d'un démarrage du moteur synchrone à aimant permanent (moteur PM), une commande est effectuée en sélectionnant l'activation d'une fonction d'annulation automatique de déclenchement anormal et la réestimation de la position de pôle magnétique du moteur synchrone par les moyens d'estimation ou la désactivation de la fonction d'annulation automatique de déclenchement anormal et l'exécution d'un affichage de déclenchement anormal.
